(19) Europäisches Patentamt
European Patent Office
Office européen des brevets

(11) Publication number: **0 477 549 A2**

# (12) EUROPEAN PATENT APPLICATION

(21) Application number: **91114317.0**

(22) Date of filing: **27.08.91**

(51) Int. Cl.[5]: **C08L 71/12**, C08L 53/00, C08L 67/00, C08G 65/48

(30) Priority: **28.09.90 US 591193**

(43) Date of publication of application: **01.04.92 Bulletin 92/14**

(84) Designated Contracting States: **DE ES FR GB IT NL**

(71) Applicant: **GENERAL ELECTRIC COMPANY**
**1 River Road**
**Schenectady New York 12305(US)**

(72) Inventor: **Yates III,John Bennie**
**38 Chrisken Drive**
**Glenmont, New York 12077(US)**

(74) Representative: **Catherine, Alain**
**General Electric France Service de Propriété Industrielle 18 Rue Horace Vernet**
**F-92136 Issy-Les-Moulineaux Cedex(FR)**

## (54) Compositions containing polyphenylene ether and polyester resin, which exhibit improved properties.

(57) Improved thermoplastic compositions are disclosed, containing polyphenylene ether resin capped with an epoxytriazine compound; a thermoplastic polyester, and a radial teleblock copolymer. The compositions can also contain certain tapered block copolymers.

EP 0 477 549 A2

The subject matter set forth herein relates generally to thermoplastic compositions. Those compositions of special interest contain polyphenylene ethers and polyesters, and are characterized by a variety of advantageous properties, as described below.

Blends of polyphenylene ethers and thermoplastic polyesters are known in the art. They are generally attractive for some applications because they exhibit the heat resistance and dimensional stability of the polyphenylene ether (also known as "PPE", or as polyphenylene oxide), while also exhibiting the solvent resistance of crystalline-type polyesters.

Since PPE resins and thermoplastic polyesters are somewhat incompatible, various methods have been developed for increasing their compatibility. For example, a polycarbonate-based material is used as a compatibilizer in U.S. Patent 4,806,297 of S.B. Brown and J.B. Yates, III. As another example, S.B. Brown discloses the capping of PPE with various epoxytriazine compounds, which also results in enhanced compatibility with polyesters, as described in U.S. Patent Application S.N. 351,905, filed on May 15, 1989.

The compatibilized PPE/polyester materials are very useful for preparing molded parts which must exhibit a high level of impact strength, flexibility, and resistance to solvents such as gasoline. Examples of such parts are housings and other components used to make lawn-care equipment, as well as automotive parts, e.g., doors and fenders.

While the PPE/polyester materials presently available exhibit many excellent properties as described above, continued improvements in performance are required for various product applications. One such property which often must be significantly enhanced in molded parts of PPE/polyester is ductility, both at room temperature, as well as at very low temperatures which characterize the winter season in many geographical locations. Furthermore, this enhancement in ductility cannot be achieved at the substantial expense of other important properties, such as flexural modulus and tensile strength.

Many of these same product applications require enhancements in the processing characteristics of the materials as well. For example, melt flow of the PPE/polyester blend is becoming increasingly critical to the efficiency of many molding processes, such as injection molding.

The need for improved PPE/polyester blends is therefore apparent. Such materials should have excellent melt flow characteristics while also substantially maintaining other important properties, such as chemical resistance, tensile strength, and impact strength, both at room temperature and at very low temperatures.

## SUMMARY OF THE INVENTION

The needs set forth above have been addressed by the discovery of an improved thermoplastic composition comprising:

A) polyphenylene ether resin capped with an epoxytriazine compound;

B) thermoplastic polyester resin; and

C) a radial teleblock copolymer.

The following description further describes various embodiments of this invention.

## DETAILED DESCRIPTION OF THE INVENTION

Component A of the present invention is prepared by the use of PPE resin. Suitable types of PPE are well-known in the art, and are described, for example, in U.S. Patents 3,306,874; 3,306,875; and 3,432,469 of Allan Hay; U.S. Patents 3,257,357 and 3,257,358 of Gelu Stamatoff; U.S. Patent 4,806,602 of Dwain M. White et al.; and U.S. Patent 4,806,297 of Sterling B. Brown et al., all incorporated herein by reference. Both homopolymer and copolymer polyphenylene ethers are within the scope of this invention.

The preferred PPE resins are homo- and copolymers which comprise a plurality of structural units of the formula

I.

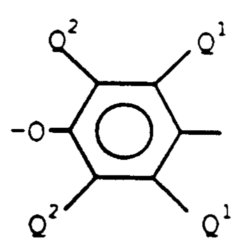

wherein each $Q^1$ is independently halogen, primary or secondary lower alkyl, phenyl, haloalkyl, aminoalkyl, hydrocarbonoxy, or halohydrocarbonoxy, wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$.

Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl, and the corresponding heptyl groups. Examples of secondary lower alkyl groups are isopropyl, sec-butyl and 3-pentyl. Preferably, any alkyl radicals are straight chain, rather than branched. Often, each $Q^1$ is alkyl or phenyl, especially $C_{1-4}$ alkyl, and each $Q^2$ is hydrogen.

Especially preferred polyphenylene ethers will be comprised of units derived from 2,6-dimethyl phenol. Also preferred in some instances are PPE copolymers comprised of units derived from 2,6-dimethyl phenol and 2,3,6-trimethyl phenol.

This invention also includes within its scope PPE resins which contain certain moieties which modify properties such as molecular weight, melt viscosity, or impact strength. For example, vinyl monomers and vinylaromatic compounds may be grafted onto the PPE polymer, as described, for example, in the application of Sterling B. Brown et al., Attorney Docket Number RD-19372, U.S. Serial No. 351,903, filed May 15, 1989, the entire contents of which are incorporated herein by reference.

As another example, coupled PPE polymers may also be used, in which the coupling agent is reacted with hydroxy groups of two PPE chains to produce a higher molecular weight polymer.

The PPE resins of this invention generally have a weight average molecular weight of about 20,000 to 80,000, as determined by gel permeation chromatography.

Furthermore, they can be prepared by methods known in the art: for example, oxidative coupling of an appropriate monohydroxyaromatic compound in the presence of a catalyst based on copper, manganese, or cobalt.

As mentioned above, the PPE polymer of this invention is capped (i.e., functionalized) with an epoxytriazine compound, as described in the application of Sterling B. Brown et al., Attorney Docket Number RD-19490, U.S. Serial No. 351,905, filed May 15, 1989, the entire contents of which are incorporated herein by reference. This type of capped polymer contains end groups of the formula

II.

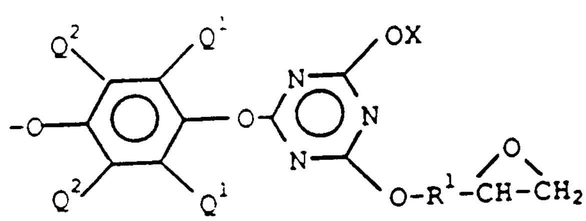

wherein $Q^1$ and $Q^2$ are as described above, X is an alkyl, cycloalkyl, aromatic group, or

III.

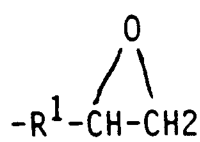

; and

$R^1$ is a divalent aliphatic, alicyclic, heterocyclic, or substituted or unsubstituted aromatic hydrocarbon group.

The epoxytriazine-capped PPE materials may be prepared in solution by reacting at least one PPE polymer with a compound of the formula

IV.

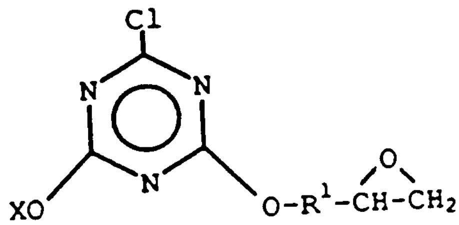

$R^1$ and X having been defined above.

The reaction can be carried out in the presence of a basic reagent such a pyridine.

Examples of epoxychlorotriazines conforming to Formula IV and suitable for this invention are the following:

2-chloro-4,6-diglycidoxy-1,3,5-triazine, also known as diglycidyl chlorocyanurate ("DGCC");

2-chloro-4-(n-butoxy)-6-glycidoxy-1,3,5-triazine, also known as n-butyl glycidyl chlorocyanurate ("BGCC"); and

2-chloro-4-(2,4,6-trimethylphenoxy)-6-glycidoxy-1,3,5-triazine,also known as mesityl glycidyl chlorocyanurate ("MGCC").

Suitable methods for the preparation of these epoxychlorotriazines are known in the art and described, for example in U.S. Patent 4,895,945 of Sterling B. Brown et al., the contents of which are incorporated herein by reference. As an illustration, 2,4,6-trichlorotriazine may be reacted with glycidol or combinations of glycidol with n-butanol or mesitol.

Usually, about 1-20% by weight epoxychlorotriazine is used for capping, based on the amount of PPE employed. The basic reagent is present in an amount effective to promote the reaction, usually about 0.5 to 5 equivalents per mole of chloroepoxytriazine.

As an alternative to the solution method, an interfacial technique may be used to prepare the epoxychlorotriazine-capped PPE polymers, wherein the reaction is carried out in the presence of water, a water-soluble base such as sodium hydroxide, and a phase transfer catalyst such as a tetra-alkylammonium chloride compound. This technique is sometimes preferred because it results in a relatively low level of chemically-bound chlorine in the product.

The capped PPE polymers may be isolated by conventional techniques, such as precipitation with a nonsolvent.

As mentioned above, the composition of this invention includes at least one thermoplastic polyester, Component B.

The choice of a particular thermoplastic polyester is not critical to this invention; many of them contain structural units of the formula

V.

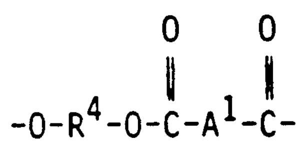

wherein each $R^4$ is independently a divalent aliphatic, alicyclic, aromatic hydrocarbon, or polyoxyalkylene group; and $A^1$ is a divalent aromatic group.

Examples of suitable polyesters containing the structures of Formula V are poly(alkylene dicarboxylates), elastomeric polyesters, polyarylates, and polyester copolymers such as copolyestercarbonates. Furthermore, it is sometimes desirable that the polyester has a relatively high carboxylic end group concentration, e.g., about 5-250 microequivalents per gram or, more preferably, about 20-70 microequivalents per gram.

Polyesters for the present invention sometimes include structural units of the formula

VI. 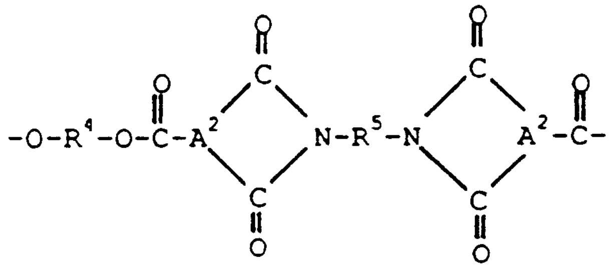

wherein $R^4$ is as previously defined, $R^5$ is a polyoxyalkylene group, and $A^2$ is a trivalent aromatic group.

The $A^1$ group in Formula V is usually p- or m-phenylene, or a mixture thereof, and $A^2$ in Formula VI is usually derived from trimellitic acid, and has the structure

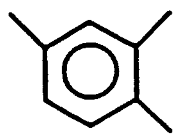

The poly(alkylene terephthalates) are often the preferred polyesters for the present invention, with poly-(ethylene terephthalate) (PET) and poly(butylene terephthalate) (PBT) being the most preferred members of this class. Mixtures of PET and PBT are also sometimes very suitable.

Examples of polyalkylene terephthalates are also provided in the following U.S. patents: 4,902,753; 4,128,526; 3,953,394; 3,671,487; 3,047,539; 2,822,348; 2,727,881; 2,720,502; and 2,465,319, the entire contents of all of these patents being incorporated herein by reference.

The polyester generally has a number-average molecular weight in the range of about 20,000 to 70,000, as determined by intrinsic viscosity at 30°C in a mixture of 60% phenol and 40% 1,1,2,2-tetrachloroethane (by weight). Methods for the preparation of polyesters described herein are generally well known in the art.

The relative amounts of PPE and polyester used for this invention are not particularly critical; they are dictated mainly by the types of properties desired for the overall composition. Usually, each polymer is employed at a level in the range of about 15% by weight to about 70% by weight, based on the weight of the entire composition. In preferred embodiments, the weight ratio of capped PPE polymer to thermoplastic polyester ranges from about 60:40 to about 20:80.

Various conventional procedures may be employed to mix the capped PPE resin with the thermoplastic polyester, as described below. Solution or melt-blending techniques are usually used. Reaction temperatures are in the range of about 175-350°C.

The blending of the capped PPE and the polyester under reactive conditions results in the formation of some PPE-polyester copolymer, which is within the scope of the present invention. Any copolymer formation resulting from this blending is referred to as "PPE-polyester copolymer". Thus, the compositions of this invention can include PPE-polyester copolymer, as well as various proportions of PPE and polyester homopolymers.

Component C of the present invention is a radial teleblock copolymer which contains segments or "blocks" which themselves comprise a conjugated diene polymer, vinyl aromatic polymer blocks, and a coupling agent. These materials are sometimes referred to as "branched" polymers, and are known in the art. For example, they are generally described in U.S. Patent 4,097,550; ADHESIVES AGE, Marrs et al, December, 1971, pp 15-20; and in RUBBER WORLD, Haws et al , January, 1973, pp 27-32, the patent and other disclosures being incorporated herein by reference.

Usually, several chains of the diene polymer (often three or more) extend from a coupling agent, with each chain terminating at its other end with a block of the vinyl aromatic polymer.

Examples of conjugated dienes which may be used to form the radial teleblock copolymer of component C are 1,3-butadiene; isoprene; 2,3-dimethyl-1,3-butadiene; 1,3-pentadiene; 3-butyl-1,3-octadiene; and mixtures of these dienes, with 1,3-butadiene being most preferred.

The vinyl aromatic polymer for use in Component C is usually prepared from compounds such as those designated by Formula I (Column 2) of U.S. Patent 4,097,550, mentioned above. Examples of such

compounds are styrene, chlorostyrene, vinyl toluene, 3-methylstyrene, 4-n-propylstyrene, 4-cyclohexylstyrene, 4-dodecylstyrene, 2-ethyl-4-benzylstyrene, 4-p-tolylstyrene, 4-(4-phenyl-n-butyl)styrene, 1-vinylnaphthalene, 2-vinylnaphthalene, as well as other alkyl, cycloalkyl, aryl, alkaryl, and aralkyl derivatives of any of these compounds. Furthermore, mixtures and/or copolymers of any of these compounds may be used to form the vinyl aromatic polymer.

The molecular weight of the radial teleblock copolymer of Component C is not especially critical, and preferably ranges from about 100,000 to about 350,000. It also preferably comprises from about 1 to about 50 parts by weight vinyl aromatic compound, and from about 99 to about 50 parts by weight conjugated diene, based on the weight of the entire teleblock copolymer. Various factors are to be considered in selecting an appropriate amount of coupling agent, such as the type of agent used, and the amount of organometallic initiator employed (the latter mentioned further below). Usually, relatively small amounts of coupling agent are preferred, for example, from about 0.1 to 1.0 parts by weight per 100 parts of resin.

Radial teleblock copolymers for Component C are available commercially. They can also be prepared by techniques known in the art. For example, they can be made by polymerizing conjugated dienes (e.g., butadiene) and vinyl aromatic compounds, e.g., styrene, in the presence of an organometallic initiator such as n-butyllithium, thereby producing copolymers which contain an active metal atom such as lithium on one end of each of the polymer chains. These metal atom-terminated polymers can then be reacted with a coupling agent which has at least three active sites capable of reacting with the carbon-metal atom bonds on the polymer chains, and replacing the metal atoms on the chains. This results in polymers which have relatively long branches which radiate from a nucleus formed by the polyfunctional coupling agent. The teachings of U.S. Patent No. 3,281,383, issued to Zelinski et al and incorporated herein by reference, describe such a method of preparation.

The coupling agents for the radial teleblock copolymers can be chosen from among polyepoxides, polyisocyanates, polyimines, polyaldehydes, polyketones, polyanhydrides, polyesters, polyhalides, and the like. These materials can contain two or more types of functional groups, such as the combination of epoxy and aldehyde groups, or isocyanate and halide groups, as also described in the above-referenced Zelinski et al patent.

Some specific preferred embodiments of this invention call for Component C to be a radial teleblock copolymer of styrene and butadiene, with terminal blocks derived from styrene, and a coupling agent selected from epoxidized polybutadiene, $SiCl_4$, or mixtures thereof. Examples of preferred epoxidized polybutadiene coupling agents are those designated commercially as Oxiron 2000 and Oxiron 2001.

Sometimes, the materials of Component C can be extended or diluted with mineral oil; e.g., light mineral oil. These extenders can comprise up to about 60% by weight of Component C.

Commercial examples of radial teleblock copolymers suitable for Component C are the FINAPRENE products, Grades 401, 411, 414, 416, and 417, available from Fina Oil Company.

The amount of Component C employed in compositions of the present invention depends on several factors, such as the particular vinyl aromatic polymer and conjugated diene employed, as well as the desired level of various properties (for example, impact strength) for end products. Usually, about 1% by weight to about 30% by weight of Component C is used, based on the weight of the entire composition. In more preferred embodiments, about 5% by weight to about 15% by weight is used.

The Applicant for the present invention has also discovered that the use of certain tapered linear block copolymers in these compositions is sometimes very desirable. This copolymer material, designated here as Component D, is often a triblock material which comprises blocks of $A^1$ and $B^1$, wherein $A^1$ is a polymerized vinyl aromatic hydrocarbon block, and $B^1$ is a hydrogenated, partially hydrogenated, or non-hydrogenated block derived from at least one polymerized conjugated diene. These materials are also described in copending application (Attorney Docket 8CN-8537), filed on September 28, 1990 for John B. Yates, and assigned to General Electric Company.

Those of ordinary skill in the polymer arts understand the concept of "tapering". Furthermore, techniques for achieving tapered polymers or copolymers are well-known in the art. Examples of references which relate to tapered polymers are U.S. patents 4,948,832; 4,939,207; 4,918,145; 4,914,248; 4,913,971; and 4,116,917, all of which are incorporated herein by reference.

Component D usually contains about 50% by weight to about 90% by weight vinyl aromatic polymer, based on the total weight of the component. In preferred embodiments, about 70% by weight to about 80% by weight vinyl aromatic polymer is present. The molecular weight (weight average) of the entire copolymer is preferably from about 90,000 to about 270,000, and most preferably, in the range of about 110,000 to about 150,000.

Furthermore, the vinyl aromatic polymer of Component D preferably includes both random and block structural units in tapered form, with the weight ratio of random to block usually being in the range of about

1.5:1 to about 4:1, and more preferably, within the range of about 2.5:1 to about 3:1. Some of the suitable materials of this type contain a block of the vinyl aromatic polymer having a molecular weight of about 10,000 to about 30,000, followed by a block of the polymerized conjugated diene having a molecular weight of about 25,000 to about 65,000, which itself is linked to a random block of vinyl aromatic-conjugated diene polymer (for example, a random block of styrene-butadiene), having a molecular weight of about 30,000 to about 50,000. The random block may be attached at its opposite end to another vinyl aromatic polymeric block, usually having a molecular weight of about 30,000 to about 50,000.

In some preferred embodiments, the $A^1$ block of Component D is derived from a monomer selected from the group consisting of styrene, alpha-methyl styrene, para-methyl styrene, vinyl toluene, vinyl xylene, and combinations of such monomers. The $B^1$ block is preferably derived from a monomer selected from the group consisting of butadiene, isoprene, ethylene, butylene, 1,3-pentadiene, 2,3-dimethyl butadiene, and combinations thereof. It is also possible that Component D can contain more than one type of $A^1$ and/or $B^1$ block.

The copolymers of Component D are very useful in some embodiments of this invention because they enhance the impact strength of the overall composition.

Tapered linear styrene-butadiene-styrene (SBS) copolymers falling within the molecular weight ranges described above are especially suitable for use as Component D. An example of such a material is FINACLEAR™ 520, a product commercially available from Fina Oil and Chemical Company.

A suitable level of Component D depends on several factors, such as the end use of the product, the level of impact strength desired, and the particular type of other components present, e.g., the particular type of radial teleblock copolymer (Component C) being employed. Usually, about 1% by weight to about 20% by weight of Component D is used, based on the weight of the entire composition. Preferably, the level is about 5% by weight to about 15% by weight.

Various additives which impart or enhance a variety of characteristics are sometimes included in the compositions described herein. Illustrative additives are flame retardants, drip retardants, dyes, pigments, colorants, lubricants, reinforcing agents, fillers, antistatic agents, heat stabilizers, ultraviolet light stabilizers, and plasticizers. Effective amounts of such additives are usually in the range, for each, of from about 0.1% by weight to about 50% by weight, based on the weight of the entire composition.

The compositions described herein can be prepared by conventional procedures well-known in the art. For example, the components mentioned above can be combined by any technique which results in an intimate blend. These techniques often involve the use of an extruder, which provides a substantial shearing force. Extruders which permit the addition of all of the ingredients through one port may be employed, or alternatively, those which contain multiple ports may be used. For example, the capped PPE and a portion of the polyester may be added through an upstream port of a suitable extruder, while the remaining polyester, radial teleblock copolymer, and any other ingredients are added through a downstream port. The extruder is sometimes vacuum-vented. Extrusion temperatures can be determined without undue experimentation by those skilled in processing thermoplastics, and are usually in the range of about 240°C to about 320°C.

The compositions of the present invention surprisingly exhibit an unusual combination of properties, in melt form, and in the form of molded articles. Some of these properties are high melt flow, excellent chemical resistance and tensile strength, and (good) impact strength. The examples which follow illustrate the characteristics of the present invention.

## EXAMPLES

The following materials were used in these examples:

CAPPED PPE (Component A) - The base resin was poly(2,6-dimethyl-1,4-phenylene ether), having an intrinsic viscosity in chloroform at 25°C of 0.40 dl./g. Four percent (4%) by weight of an epoxytriazine compound of formula IV (percentage expressed as a percentage of the PPE) was dissolved in pyridine and then added to a solution of the PPE and toluene, with stirring. The solution was heated for 0.5 hour, after which the products were precipitated with methanol, filtered, washed with methanol, and then dried.

POLYESTER (Component B) - The polyester employed was a poly(butylene terephthalate), having a weight average molecular weight of about 103,000, and a dispersity of about 1.9, as determined by gel permeation chromatography. The polyester had an acid end group number of about 50 microequivalents/g, as determined by titration.

BLOCK COPOLYMER - A saturated styrene-butadiene-styrene linear block copolymer having a styrene/rubber ratio of about 28:72 was used. The polystyrene end blocks have a weight average molecular weight of about 9,500 each, while the butadiene midblock had a weight average molecular weight of about

47,000. Thus, the total molecular weight for the copolymer was about 66,000.

RADIAL TELEBLOCK COPOLYMER (Component C) - The materials used here were various Finaprene™ styrene/butadiene thermoplastic elastomers (Fina Oil & Chemical Company), as shown in Table 1:

TABLE 1

| Finaprene™ Grade | Styrene/Butadiene Ratio (weight) | Melt Flow Index[(a)] | Tensile Strength (psi) |
|---|---|---|---|
| 401 | 80/20 | < 0.5 | 1400 |
| 411 | 70/30 | Negligible | 2000 |
| 414 | 60/40 | 5 | 3600 |
| 416 | 70/30 | 2 | 2600 |
| 417 | 70/30 | 2.5 | 2500 |

(a) = grams/10 minutes, 200°C, 5 kg load

The compositions in the following examples were prepared by dry-blending and compounding the components, using a 30mm Werner & Pfleiderer twin-screw extruder. Component levels are expressed in parts by weight (pbw), unless otherwise indicated.

The extrudate was quenched and pelletized, and the products were then molded into test specimens, using a Toshiba injection molding machine.

Flow was measured in flow channel inches: the length of melt flow in a 0.250 inch-by-0.125 inch channel; with molding conditions of 525°F cylinder (set), approximately 175°F, mold (set), and 10,000 psi injection pressure into the mold.

STABILIZERS - The compositions also contained three antioxidants (sulfur-based, hindered phenol, and phosphite-based), each at a level of about 0.2 to 0.3 pbw, based on 100 pbw resin.

EXAMPLE 1

The compositions in Table 2 were prepared as described above. Tests on molded pieces (using conventional ASTM procedures) resulted in the properties also set forth in the table:

TABLE 2

| | Sample Number | | | |
|---|---|---|---|---|
| | 1* | 2 | 3 | 4 |
| Capped PPE (pbw) | 30 | 30 | 30 | 30 |
| Polyester | 60 | 60 | 60 | 60 |
| Triblock Copolymer (a) | 10 | -- | -- | -- |
| Radial Teleblock Copolymer (FINAPRENE - grade) | -- | 10 (414) | 10 (416) | 10 (417) |
| PROPERTIES | | | | |
| Flow (Inches) | 19.5 | 21.0 | 22.0 | 22.0 |
| Izod Impact Strength (Notched)(ft-lb/in) | 17 | 11 | 15 | 16 |
| Dynatup Impact Strength (b) (Room Temp.)(ft-lbs) | 35D | 37D | 39D | 39D |
| Dynatup Impact Strength (-20°F)(ft-lbs) | 47D | 44B | 49D | 50D |
| Flexural Modulus (Kpsi) | 282 | 312 | 299 | 292 |
| Flexural Strength (Kpsi) | 10.9 | 12.0 | 11.5 | 11.4 |
| Tensile Yield (Kpsi) | 7.6 | 7.6 | 7.2 | 7.3 |
| Tensile Elongation (%) (at break) | 41 | 38 | 48 | 77 |
| Heat Distortion Temperature (°F) | 331 | 311 | 334 | 324 |

*Comparative Example
(a) = Styrene-Butadiene-Styrene Linear Block Copolymer (KRATON® D1102)
(b) = "D" = Ductile, "B" = Brittle

The data in Table 2 demonstrate that compositions of the present invention exhibit a variety of excellent property characteristics. Special attention is directed to the flow data, in view of the fact that increases in flow length of 1-2 inches represent a very significant improvement in the time required to fill molds for large plastic parts.

Those skilled in the chemical arts recognize that modifications and variations of the present invention are possible in light of the above teachings. It is to be understood, therefore, that changes may be made in particular embodiments described above which are within the full intended scope of the invention as defined by the claims which follow.

All of the above-mentioned patents are incorporated herein by reference.

**Claims**

1. A thermoplastic composition comprising:
   A) polyphenylene ether capped with an epoxytriazine compound;
   B) thermoplastic polyester; and
   C) a radial teleblock copolymer.

2. The composition of claim 1 wherein the polyphenylene ether comprises a plurality of structural units of the formula:

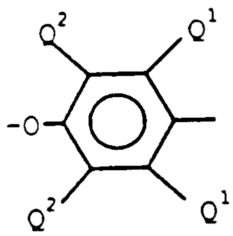

wherein each $Q^1$ is independently halogen, primary or secondary lower alkyl, phenyl, haloalkyl, aminoalkyl, hydrocarbonoxy, or halohydrocarbonoxy, wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$.

3. The composition of claim 2 wherein the polyphenylene ether is poly(2,6-dimethyl-1,4-phenylene ether).

4. The composition of claim 2 wherein the polyphenylene ether is derived selected from the group consisting of 2,6-dimethyl phenol; 2,3,6-trimeth mixtures thereof.

5. The composition of claim 2 wherein the polyester comprises structural units of the formula

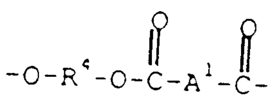

,

wherein each $R^4$ is independently a divalent aliphatic, alicyclic, or aromatic hydrocarbon group or polyoxyalkylene group, and $A^1$ is a divalent aromatic group.

6. The composition of claim 5 wherein the polyester is a poly(alkylene dicarboxylate), or mixtures of at least two poly(alkylene dicarboxylate)'s.

7. The composition of claim 6 wherein the poly(alkylene dicarboxylate) is either poly(ethylene terephthalate), poly(butylene terephthalate), or mixtures thereof.

8. The composition of claim 5 wherein the polyester further comprises units of the formula

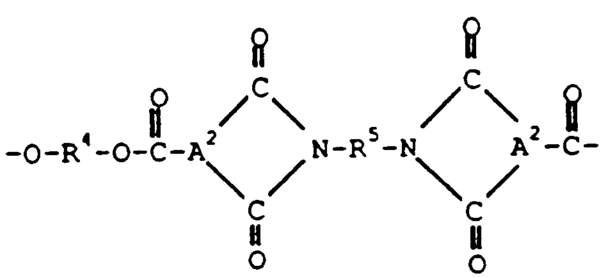

wherein $R^5$ is a polyoxyalkylene group, and $A^2$ is a trivalent aromatic group.

**9.** The composition of claim 1 wherein the radial teleblock copolymer of component (C) comprises a vinyl aromatic compound, a conjugated diene, and a coupling agent.

**10.** The composition of claim 9 wherein the radial teleblock copolymer comprises from about 1 to about 45 parts by weight of the vinyl aromatic compound, from about 99 to about 55 parts by weight of the conjugated diene, and a minor amount of the coupling agent.

**11.** The composition of claim 9 wherein the vinyl aromatic compound is selected from the group consisting of styrene, chlorostyrene, vinyl toluene, 3-methylstyrene, 4-n-propylstyrene, 4-cyclohexylstyrene, 4-dodecylstyrene, 2-ethyl-4-benzylstyrene, 4-p-tolylstyrene, 4-(4-phenyl-n-butyl)styrene, 1-vinylnaphthalene, 2-vinylnaphthalene, and organic derivatives of any of these compounds.

**12.** The composition of claim 9 wherein the conjugated diene is seleted from the group consisting of 1,3-butadiene; isoprene; 2,3-dimethyl-1,3-butadiene; 1,3-pentadiene; 3-butyl-1,3-octadiene; and mixtures of any of these dienes.

**13.** The composition of claim 9 wherein the coupling agent is selected from the group consisting of polyepoxides, polyisocyanates, polyimines, polyaldehydes, polyketones, polyanhydrides, polyesters, polyhalides, epoxidized polydienes, halogenated silanes, and mixtures of any of these materials.

**14.** The composition of claim 9 wherein the radial teleblock component is a copolymer of styrene and butadiene, with terminal blocks derived from styrene, and the coupling agent is selected from the group consisting of epoxidized polybutadiene, tetrachlorosilane, and mixtures thereof.

**15.** The composition of claim 9 wherein the amount of component C present is in the range of about 1% by weight to about 30% by weight, based on the weight of the entire composition.

**16.** The composition of claim 1, further comprising a tapered linear block copolymer (Component D).

**17.** The composition of claim 16, wherein component D comprises blocks of $A^1$ and $B^1$, wherein $A^1$ is at least one polymerized vinyl aromatic hydrocarbon block, and $B^1$ is a hydrogenated, partially hydrogenated, or non-hydrogenated block derived from at least one polymerized conjugated diene.

**18.** The composition of claim 17, wherein the $A^1$ block is derived from a monomer selected from the group consisting of styrene, alpha-methyl styrene, para-methyl styrene, vinyl toluene, vinyl xylene, and mixtures of such monomers.

**19.** The composition of claim 17 wherein the $B^1$ block is derived from a monomer selected from the group consisting of butadiene, isoprene, ethylene, butylene, 1,3-pentadiene, 2,3-dimethyl butadiene, and combinations thereof.

**20.** The composition of claim 16 wherein the amount of component D present is in the range of about 1% by weight to about 20% by weight, based on the weight of the entire composition.

**21.** The composition of claim 1, further comprising effective amounts of at least one additive selected from the group consisting of flame retardants, drip retardants, plasticizers, stabilize agents, fillers, reinforcing agents, lubricants, colorants, dyes, and pi

**22.** The composition of claim 1, wherein the weight ratio of component (A) to component (B) ranges from about 60:40 to about 20:80.

**23.** A thermoplastic composition comprising:

I) the reaction product of an epoxytriazine-functionalized polyphenylene ether polymer with a thermoplastic polyester, and

II) at least one radial teleblock copolymer.

**24.** The composition of claim 23, wherein the polyphenylene ether is derived from a monomer selected from the group consisting of 2,6-dimethyl phenol; 2,3,6-trimethyl phenol; and mixtures thereof; and wherein the polyester is selected from the group consisting of poly(alkylene dicarboxylates), elastomeric polyesters, polyarylates, polyester copolymers, and mixtures of these materials.

**25.** The composition of claim 24, wherein the poly(alkylene dicarboxylate) is selected from the group consisting of poly(ethylene terephthalate), poly(butylene terephthalate), and mixtures thereof.

**26.** The composition of claim 24 wherein the epoxytriazine compound is selected from the group consisting of diglycidyl chlorocyanurate, n-butyl glycidyl chlorocyanurate, and mesityl glycidyl chlorocyanurate.

**27.** The composition of claim 24, further comprising a tapered linear block elastomeric copolymer which itself comprises blocks of $A^1$ and $B^1$, wherein $A^1$ is at least one polymerized vinyl aromatic hydrocarbon block, and $B^1$ is a hydrogenated, partially hydrogenated, or non-hydrogenated block derived from at least one polymerized conjugated diene.